# EUROPEAN PATENT APPLICATION

(11) **EP 4 533 947 A1**
(43) Date of publication of application: **09.04.2025**
(21) Application number: 23814575.9
(22) Date of filing: 02.06.2023
(51) Int. Cl.: A01N 25/06, A01N 53/00, A01P 7/04, A01M 7/00

(54) **MICRO-DOSE INSECTICIDE AEROSOL COMPOSITION AND USE THEREOF**

(30) Priority: 02.06.2022 BR 102022010835; 25.05.2023 BR 102023010234
(71) Applicant: Ipanema Industria de Produtos Veterinarios Ltda, 18190-000 Araçoiaba da Serra - SP (BR)
(72) Inventor: DUARTE, Marcelo Jose, 18040-123 Sorocaba (BR)
(74) Representative: Studio Torta S.p.A.
(86) International application number: PCT/BR2023/050182
(87) International publication number: WO 2023/230692

(57) **Abstract**

This invention relates to a micro-dose insecticidal aerosol composition for controlling disease-transmitting insects, whether flying or crawling.

The micro dose insecticidal aerosol composition in one single actuation, comprises pyrethroid insecticide in hydrocarbon solvent, capable of generating particles in the air and in the environment with particle diameter D₅₀ ≤ 0,15 µm corresponding to 500 to 800 mg of the composition applied every 5 m³.

## Description

### FIELD OF APPLICATION

The present invention deals with a micro-dose insecticide for controlling disease-transmitting insects, whether flying or crawling.

### STATE OF THE ART

Deaths, damage to public health and the economy are some of the consequences caused by diseases transmitted by insects that share the environment with humans. Population control of these disease vectors is global. In Brazil alone, it is estimated that dengue, transmitted by the mosquito *Aedes Aegypti,* is responsible for thousands of deaths and million-dollar losses to the economy. It is well known that mosquitoes are the animals that cause the most deaths on the planet. In this scenario, searching for methods to control disease-causing insect populations is necessary.

There are already numerous groups of molecules approved for use as insecticides, such as pyrethroids, carbamates, organophosphates, among others.

Highlighted within the class of pyrethroids, transfluthrin (chemical name: 2,3,5,6-tetrafluorobenzyl (1R,3S)-3-(2,2-dichloro vinyl)-2,2-dimethylcyclopropane 2,3,5,6-tetrafluoro benzyl(1R)-trans-3-(2,2-dichlorovinyl)-2,2-dimethylcyclopropane carboxylate) is an insecticide whose use is authorized by the National Health Surveillance Agency (ANVISA) for professional and domestic use. The structural formula of transfluthrin follows as shown in figure 1:

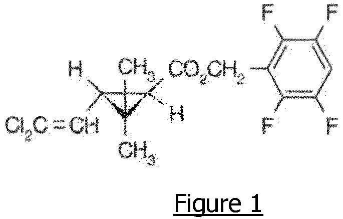

Transfluthrin has a toxicological classification of IV, meaning it is not very toxic. It acts by affecting the pre-synapse in the sodium channels of the nerve membrane in insects, causing their death by intoxication and paralysis. Absorption occurs through contact and inhalation. It is recommended for flies, mosquitoes and cockroaches.

This compound had its synthetic description in patent DE 2714042 and DE 3705224.

This active ingredient is widely used as an insecticide in Brazil and around the world, with several commercial brands using it to manufacture aerosol household sanitary products for domestic and professional use.

Aerosol products consist of a pressed system (content under pressure), i.e., the product of interest, in the case of the active ingredient, is dispersed in a solvent and/or excipient, and is expelled/dosed into the environment by a propellant gas. This gas has the role of carrying the product of interest and also of partitioning it (breaking it into smaller particles). It is the size of this particle that will define the type of product: whether it will be an aerosol (airborne particles) or a spray (application on surfaces).

The smaller the particle, in the case of aerosols, the better the time it will remain suspended in the air.

The particle needs to be "free" in the air to come into contact with flying insects: the probability of the insect becoming contaminated with the product that is present on some surface (wall or furniture, for example) is low.

The time that the particle remains in air suspension is defined by the relationship of its weight and size x the tension of the atmospheric air (surface tension) x the dynamics of the air (movement that the atmospheric air has in the environment). The longer the particles remain in the air, the better their insecticidal effectiveness.

These products historically use some liquid vehicle in their compositions, which may be organic solvents (commonly used in years prior to the 2000s, as they solubilize transfluthrin) or water (used in products with more recent registrations as they provide advantages of using a non-toxic excipient to plants and animals and does not damage surfaces, which was a common event with organic solvents; in this type of formulation, transfluthrin is distributed only with vigorous agitation, as it is insoluble in water and the formulation is of the micro emulsion type). In these types of insecticide formulations for environmental application, the vehicles used (whether solvents or not), and regardless of the class of active ingredient, considerably increase the size and weight of the droplet/particle of the product, during its application (in aerosol and/or spray). These particles produced, being larger and heavier than atmospheric air (normally with 75% of the volume of droplets produced greater than 30 microns), tend to move, in most of the design volume, towards the ground, whereby very little content remains suspended in the air for a few seconds or minutes.

In formulations with water in the composition, the droplets produced in aerosol products immediately project towards the ground, thus leaving no product/active ingredient that provides activity against flying insects. For commercial products in aerosol form to be effective, therefore, the user must apply large doses into the environment, which can, in the end, cause intoxication shortly after their use in the environment.

Typically, aerosol insecticides describe in their mode of use multiple applications in any environment, with jets lasting 7 to 10 seconds each, i.e., they dose around 15 to 25 g of insecticide solution in each application for 10 m³ treatment.

Document JP 6888947 teaches an aerosol composition of transfluthrin in butane, propane or pentane, with particle diameter equal to or at least 20 µm.

Document WO 2015133318 teaches an aerosol composition of pyrethroid or transfluthrin of the "one push" type, or micro dose of 0.1 to 0.4 ml, with 90% of the particles being 20 to 80 µm.

Document WO 2019078219 teaches an aerosol composition of pyrethroids or transfluthrin in butane, propane, or pentane solvent, with 20% of the particles having a diameter greater than 88 µm, with one jet corresponding to 1.0 to 3.0 ml.

Document BR 112019024465 teaches an aerosol composition of pyrethroid or transfluthrin associated with pralethrin and cypermethrin, in butane, propane or pentane, but is expelled in the form of foam.

### OBJECTIVES OF THE INVENTION

In this sense, the objective was to develop a stable composition that would allow the production of a microstructural particle of transfluthrin, in an aerosol-type product (pressed).

The micro particles in the composition are capable of being distributed throughout the environment to be treated, in a uniform manner, remaining for hours in the aerial portion and ensuring that they come into contact with the target insect, regardless of its geographical position in that area, by using only one micro dose, i.e., a 1-second spray ("one-push" or micro dose in one single actuation), containing around 0.650 g (+/- 0.050 g) of insecticide solution, to treat the same 5 m³.

### PROBLEM SOLVED

The present invention solved an environmental and public health problem, as it uses a smaller amount of insecticide than the one used by man in the aerosol technique known to date.

### UNUSUAL EFFECT

The present invention has managed to have 100% insecticidal efficacy even by using a smaller amount of insecticide released into the environment, and still ensure that the micro particles remain in the air and the environment for hours.

### BRIEF DESCRIPTION

The present invention describes a simple and applicable method for preparing an aerosol pharmaceutical form, of the micro dose type in one single actuation, comprising pyrethroid insecticide in hydrocarbon solvent, capable of generating particles in the air and in the environment with particle diameter D₅₀ ≤ 0,15 µm corresponding to 500 to 800 mg of the composition applied every 5 m³.

### DETAILED DESCRIPTION

This invention deals with a new insecticidal product, for application in open and/or closed environments, based on the unique interaction of a propellant gas with the active insecticidal ingredient, eliminating insects that cause diseases in humans and animals.

The production process of the present invention consists of preparing, under controlled conditions and/or normal conditions of temperature and pressure, a solution between propellant gas and an insecticidal active ingredient.

The composition of the formulation, according to the invention, comprises, in a mass/mass (m/m) percentage ratio, the following components:
- 0.1% to 5% pyrethroid class insecticide;
- 99.1% to 95% hydrocarbon.

Pyrethroids, according to the invention, can be chosen within this class as: cypermethrin, imiprothrin, cyfenothrin, pralethrin, permethrin, transfluthrin, others, and even mixtures thereof. Preferably, transfluthrin is used.

The embodiment of the composition, according to the invention, comprises, in a mass/mass (m/m) percentage ratio, the following components:
- 0.1% to 5% transfluthrin insecticide;
- 99.1% to 95% hydrocarbon.

According to another embodiment of the composition, according to the invention, it comprises in a mass/mass (m/m) percentage ratio the following components:
- 0.1% to 5% transflutin insecticide;
- 99.1% to 95% butane.

The propellants, according to the invention, can be chosen from petroleum-derived gases (hydrocarbons) such as: butane, butene, propane, propylene, others, and even mixtures thereof. Preferably, butane is used.

The internal working pressures of the tube containing the product can present results between 20 and 70 psi (at 21°C).

The preferred components are listed in table 1 below (type of component, as well as the variation in mass in relation to the components and their role within the composition):

**TABLE 1**

| Component | Composition variation (mass/mass) | Component role |
|---|---|---|
| Transfluthrin | 0.1% to 5% | Insecticide (active ingredient) |
| Butane | 99.1% to 95% | Solvent and propellant |

In this composition, a stable solution is obtained, where transfluthrin is first filled in a bottle/container, made of plastic, glass or metal. The packaging then receives the applicator valve, which may have a plastic and/or metal composition, which is responsible for the watertight closure of the bottle, for allowing the passage of the propellant gas to be packaged and for releasing the internal contents during the application of the aerosol.

In this invention, when the two components are inside the bottle, immediately after their respective fillings, transfluthrin is diluted in the propellant gas.

The propellant gas is derived from petroleum. These gases, when in pressed form (in closed packages and under pressure), remain in "liquid" physical form, which allows them to interact with the active ingredient in a solute-solvent relationship. In this case, transfluthrin is dissolved directly in the petroleum-derived propellant, which eliminates the need for other dilution solvents/excipients.

For this reason, when the product is activated (by pressing the actuator, which is the device responsible for opening the valve and thus releasing the contents of an aerosol product) it is capable of producing a micrometer-sized particle.

This takes place because the propellant gas, which is responsible for "breaking" and carrying the active ingredient (preferably transfluthrin), for also dissolving this "active ingredient", does not need much energy to do so. The partition energy of transfluthrin is low (e.g. octanol/water partition coefficient: log Pow > 5), thus requiring little pressure to produce micrometric particles. The combination of these properties, together with the solute-solvent interaction between the active ingredient and propellant gas results in the production of a micrometric aerosol particle.

Below are some differences of the present invention:
- The micrometric particles produced according to the invention have a balanced weight in relation to the density of the atmospheric air. For this reason, they spend hours moving around in a closed environment, providing an insecticidal efficacy capable of eliminating 100% of the insects present in the treated environment.
- The micrometric particles are distributed throughout the environment. In the end, the insects will be eliminated regardless of their position in the environment. The product can even reach cracks, crevices and small corners of the environment. For this reason, it is the only one that can eliminate flying and crawling insects, regardless of their position, even if they are in hiding places.
- With the production of a micro particle, it is possible to reduce the dose of active ingredients in the environment. This system doses approximately 650 mg of solution per 1-second actuation, i.e., from 3.0 mg to 27.0 mg of transfluthrin for every 5 m³. This can represent up to 20 times less active dose and propellant gas per area when compared to any commercial insecticide product.
- With the production of a micro particle, it is possible to improve its deposit in the insect's body and subsequently the absorption of transfluthrin, whether by contact or inhalation.
- As a micro dose is applied to the environment, it ends up being safer for the user, as the dose of active ingredient dispersed in the environment is too low to trigger poisoning and/or allergic reactions in the human respiratory system.

The following examples are provided with the aim of better explaining the scope of the present invention, and should not be used for limiting purposes of the invention.

### EXAMPLE 1

The interaction of these materials, under pressure, generates a stable solution, even when exposed to temperatures of 50° Celsius. This is proven through stability studies conducted on product samples exposed to 3 different temperature and humidity conditions. The following are the conditions for stability studies (according to Zone IV), described in table 2, which indicates variations in temperature and relative humidity according to the study:

**TABLE 2**

| Study | Temperature (°C) and humidity (%RH) | Exposure time |
|---|---|---|
| Ultra-accelerated stability | 50 °C and 75 %UR | 3 months |
| Accelerated stability | 40 °C and 75 %UR | 6 months |
| Long-lasting stability | 30 °C and 65 %UR | 24 months |

According to the invention, it was decided to demonstrate the results of the accelerated stability study (6 months, 40°C and 75% relative humidity) of 3 different batches using the same mass concentrations of the components (identical compositions): 0.6% transfluthrin and 99.4% butane gas. The results are shown in table 3 below, which indicate that transfluthrin remained stable, without showing drops greater than 5% in 6 months of stability study.

**TABLE 3**

| Times in months | | | | | | | |
|---|---|---|---|---|---|---|---|
| Batch | Start time | 1 | 2 | 3 | 4 | 5 | 6 |
| 001 | 0.603 | 0.601 | 0.608 | 0.601 | 0.603 | 0.605 | 0.603 |
| 002 | 0.610 | 0.608 | 0.604 | 0.635 | 0.598 | 0.601 | 0.610 |
| 003 | 0.607 | 0.604 | 0.604 | 0.601 | 0.608 | 0.610 | 0.605 |

Remark:
(1) The unit of measurement for the results is mass/mass (m/m) in percentage (%).
(2) The values reported refer to the transfluthrin content (insecticide active ingredient).

The present invention was tested using official methodology for analyzing the toxicological effect, recommended by both the National Health Surveillance Agency (ANVISA) and the World Health Organization (WHO), where the results obtained demonstrated inhalation safety in trials on mice of the species "*Rattus norvergicus*" (they did not show any clinical signs or mortality when exposed to the product).

In this study, ten mice (*Rattus norvegicus*), 3 males and 3 nulliparous and non-pregnant females, were used at 8 weeks of age. The selected animals were randomized and formed a group in each treatment, keeping the average weight within ± 20% calculated separately per group. Each animal was identified by a mark on its tail. Each box was identified with labels containing the sample code, study number, start date and end date of the trial. The temperature of the animal room was maintained at 22°C (±3°C), as well as relative humidity between 30 and 70%. Photoperiod, in sequential cycles of 12 hours of light and 12 hours without light and air exchanges programmed for 10 to 15/hour.

A Jaeger Inhalation Chamber, Mark II with an integrated collision nebulizer system, measuring 4.25 cm in diameter and 3.5 cm in height, with an approximate volume of 1.5 liters, was used. The chamber has positive pressure. The air source used came from compressed air (21% oxygen and 79% nitrogen). Rats were exposed to the aerosolized test item for a period of 4 hours in nose-only plexiglass tubes, using the direct flow exposure principle. The total air flow in the chamber was 10 L.min-1. During the period of exposure of the animals to the test item, four temperature and humidity readings were taken. The temperature and relative humidity in the animals' breathing zone were maintained in the range between 19° and 25°C and 30 and 70%, respectively, using a thermo hygrometer located next to the inhalation chamber.

Individuals exposed to the product were analyzed for 14 days, with an interval of 1 hour and after this period they were sacrificed for exploratory necropsy.

### EXAMPLE 2

Another experiment that the invention was subjected to is its effectiveness against some species of disease-transmitting insects.

The experiment was tested against the methodology for analyzing insecticidal efficacy for flying insects of the World Health Organization (WHO) - Control of Neglected Tropical Diseases WHO Pesticide Evaluation Scheme. Guideline for Efficacy Testing Household Insecticide Products, Mosquito Coils, Vaporizer Mats, Liquid Vaporizers, Ambient Emanators and Aerosols. WHO/HTM/NTD/WHOPES/2009.3.

In this test, a closed chamber with 50 female individuals received a micro dose of the composition according to the invention (650 mg of product, +/- 10 mg: composed of 99.4% butane gas and 0.6% Transfluthrin, respectively, mass/mass). Individual deaths were assessed over a 24-h period.

The composition according to the invention was tested, with individual tests for the following species of mosquitoes: *Culex, Anopheles, Aedes aegypti* (species with the greatest negative impact on human health). There were 3 repetitions for each trial. Efficacy in all trials was 100%, i.e., all individuals died within 5 minutes of coming into contact with the product of the invention.

## Claims

1. Micro dose insecticidal aerosol composition **characterized because** it is of the micro dose type in one single actuation, comprising pyrethroid insecticide in hydrocarbon solvent, capable of generating particles in the air and in the environment with particle diameter D₅₀ ≤ 0,15 µm corresponding to 500 to 800 mg of the composition applied every 5 m³.

2. Micro-dose insecticidal aerosol composition, according to the requirement 1, **characterized because** the aerosol composition comprises mass/mass 0.1% to 5% pyrethroid insecticide and 99.1% to 95% hydrocarbon.

3. Micro dose insecticidal aerosol composition according to requirements 1 or 2, **characterized because** the hydrocarbon is chosen from the group comprising: butane, butene, propane.

4. Micro dose insecticidal aerosol composition according to requirement 3, **characterized because** the hydrocarbon is butane.

5. Micro dose insecticidal aerosol composition according to requirement 1, **characterized because** the pyrethroid is chosen from the group comprising: cypermethrin, imiprothrin, cyfenothrin, pralethrin, permethrin, transfluthrin.

6. Micro dose insecticidal aerosol composition according to requirement 5, **characterized because** the pyrethroid is transfluthrin.

7. Micro dose insecticidal aerosol composition according to requirement 6, **characterized because** the micro dose corresponds to 3.0 mg to 27 mg of transfluthrin for every 5 m³.

8. Micro dose insecticidal aerosol composition according to requirement 1, **characterized because** the pressure applied to the aerosol can vary from 20 to 70 psi at 21°C.

9. Micro dose insecticidal aerosol composition according to requirement 1, **characterized because** the aerosol composition comprises mass/mass 0.1% to 5% transfluthrin and 99.1% to 95% hydrocarbon.

10. Micro dose insecticidal aerosol composition according to requirement 1, **characterized because** the aerosol composition comprises mass/mass 0.1% to 5% transfluthrin and 99.1% to 95% butane.

11. Use of micro dose insecticidal aerosol composition according to any one of the preceding requirements, **characterized because** they eliminate flying or crawling insects from the environment where it was applied.
